# EUROPEAN PATENT APPLICATION

(11) **EP 2 731 333 A1**
(43) Date of publication of application: **14.05.2014**
(21) Application number: 14153695.3
(22) Date of filing: 25.01.2010
(51) Int. Cl.: H04N 7/173, H04L 12/28, H04N 21/4147, H04N 21/418, H04N 21/433, H04N 21/436, H04N 21/441, H04N 21/45, H04N 21/4627, H04N 21/482

(54) **Shared planner**

(30) Priority: 23.01.2009 GB 0901171
(62) Divisional of application: 10703320.1
(71) Applicant: British Sky Broadcasting Limited, Middlesex TW7 5QD (GB)
(72) Inventor: Brunier, Remi, Isleworth, Middlesex TW7 5QD (GB); Safouane, Dounia, Isleworth, Middlesex TW7 5QD (GB); Dollin, John, Isleworth, Middlesex TW7 5QD (GB); Sahota, Pete, Isleworth, Middlesex TW7 5QD (GB); Griffith, Steve, Isleworth, Middlesex TW7 5QD (GB); Farrell, Dominic, Isleworth, Middlesex TW7 5QD (GB); Drewer, Adam, Isleworth, Middlesex TW7 5QD (GB)
(74) Representative: Cross, James Peter Archibald

(57) **Abstract**

An improved media system is provided for sharing, accessing and managing stored media content between a plurality of networked Set-Top Boxes (STB). Aspects include displaying a global STB planner listing media content stored on all remote STBs, switching between remote STB planners and filtering remote listings of media content.

## Description

### Field of the Invention

This invention relates to an apparatus, method and system for receiving and playback of media content, particularly in a system of networked media devices.

### Background of the Invention

Satellite and cable receivers are usually provided in a set-top box (STB) separate from, but connectable to a television set. The STB decodes audio and video signals from a satellite or cable broadcast and outputs them to the television set. If satellite or cable television is to be available in more than one room in a household, separate STB's may be provided in each room at additional cost. However, STB's may store records of programmes selected for future viewing, and/or recordings of programmes previously broadcast, and users may want to access the same set of programmes regardless of where they are in the household.

Examples of satellite receiver STB's provided by the applicant, British Sky Broadcasting Ltd., are the Sky⁺® and Sky⁺® High Definition (HD) set top boxes. Both of these have integrated storage devices for storing the recorded programmes.

Sharing of media content between personal computers and media player devices over a network is known, for example with Microsoft's Windows Media Player, Windows Media Connect, Personal Media Sharing and Mediaroom.

It is an object of the present invention to provide an improved system for sharing, accessing and managing stored media content between a plurality of networked STBs.

### Statement of the Invention

According to one aspect of the present invention, in a system of media devices in a local area network, a method of filtering remote listings of media content is provided, comprising requesting access by a first media device to media content stored on a second media device via the local area network, each media content being associated with at least one access criterion, determining for each stored media content if the first media device meets the associated at least one access criterion, and displaying by the first media device a listing of the stored media content which are determined to have associated at least one access criterion met by the first media device.

According to another aspect of the present invention, in a system including a plurality of media devices in a local area network, each media device for receiving and storing a plurality of media content, a method for displaying a global STB planner is provided, comprising receiving a listing of stored media content from each of said plurality of media devices, and displaying a listing of the media content stored at each of said plurality of media devices as an agglomerated list.

According to yet another aspect of the present invention, in a system including a plurality of media devices in a local area network, each media device for receiving and storing a plurality of media content, a method for switching between remote STB planners is provided, comprising displaying at a first media device a listing of media content stored on the first media device, and switching to displaying at the first media device a listing of media content stored on a second media device.

In yet a further aspect of the invention, there is provided an apparatus for performing the methods as described above. In another aspect, there is provided a computer program arranged to carry out the method when executed on the STB.

### Brief Description of the Drawings

Specific embodiments of the present invention will now be described with reference to the accompanying drawings, in which:
Figure 1 is a block diagram of a media system according to an embodiment of the invention;
Figure 2 is a block diagram of the functional components of an exemplary Set-Top Box (STB); and
Figure 3 is a flow diagram of the operation of providing an agglomerated listing of stored media content.

### Detailed Description of Embodiments of the Invention

### .System Overview

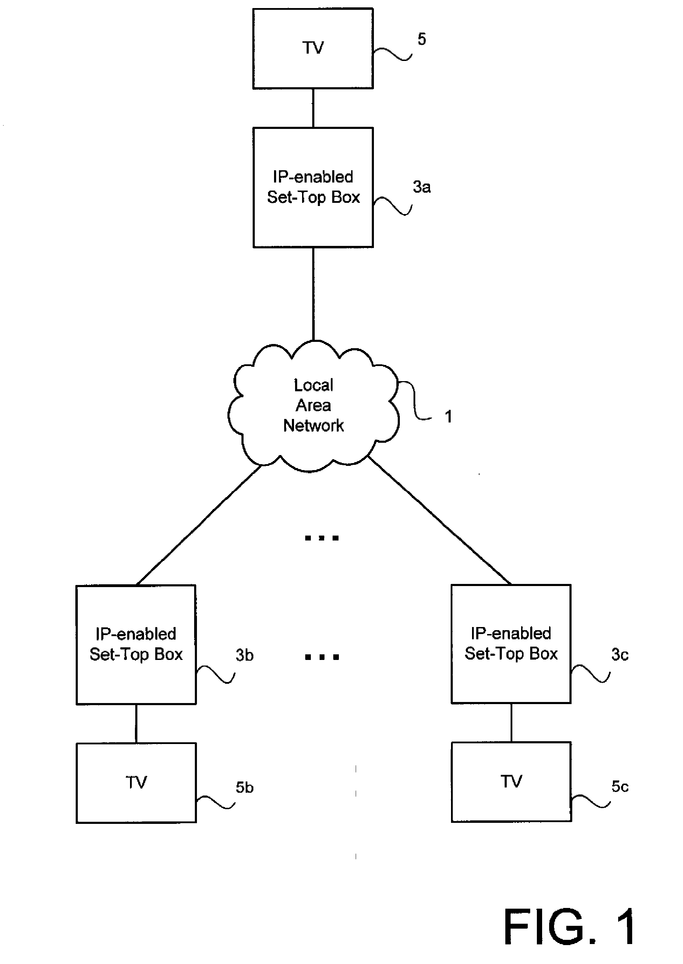

Figure 1 is a block diagram schematically illustrating an arrangement of media system components connected to a LAN 1 according to one embodiment of the invention. In this embodiment, a plurality of networked STBs 3a, 3b and 3c are connected via the LAN 1, each STB 3 also optionally connected to a respective television (TV) set 5a, 5b and 5c. For example, each STB 3 and connected TV 5 may be provided in a different room within a home. Although three STBs 3a, 3b and 3c are illustrated in Figure 1, any number of STBs 3 may be provided.

In this embodiment, each STB 3 receives broadcast media content such as television programmes or movies from a broadcast media source (not shown) over a broadcast connection, such as a satellite or cable link or the Internet. Each STB 3 may have a respective connection to a broadcast media source, or two or more of the STBs 3 may share a connection to a broadcast media source. The broadcast media source connections need not all be of the same type; for example, one STB 3 may have a cable connection, another may have a satellite connection, and another may have an Internet connection. The STB 3a, 3b and/or 3c may store the received broadcast media content for subsequent playback or for transmission to and playback on another device connected to the LAN 1. The STBs 3 in this embodiment are Ethernet and Internet Protocol (IP) enabled STBs which can communicate with other network devices, such as other IP-enabled STBs 3, connected to the LAN 1, as will be discussed in greater detail below. The arrangement of networked IP-enabled STBs 3 advantageously allows access to media content stored on one STB 3 from another STB 3 within the LAN 1.

### Set-Top Box (STB) Components

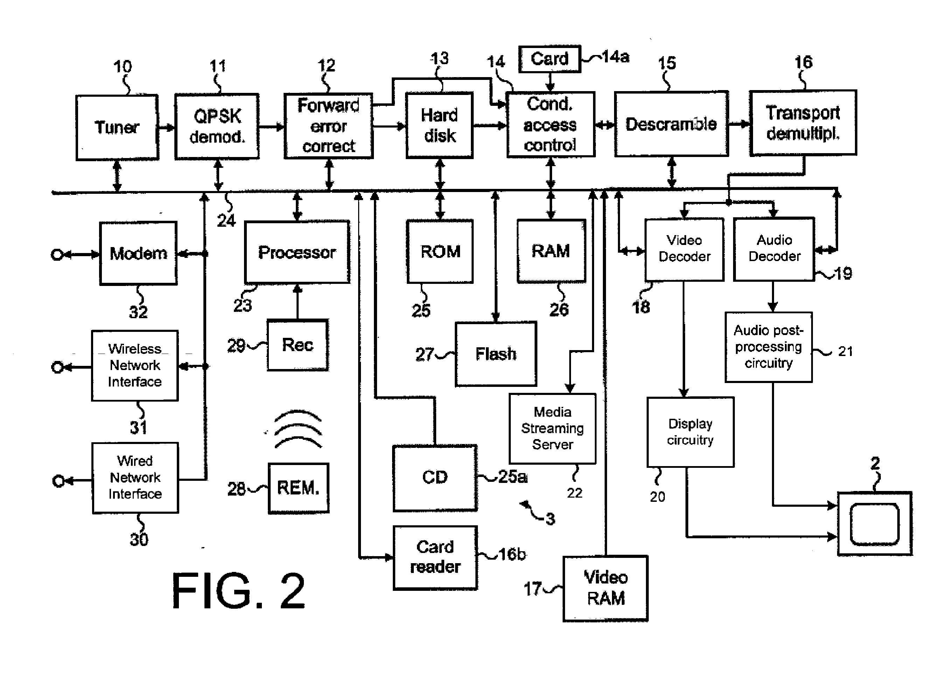

Figure 2 of the accompanying drawings shows one example of a STB 3 in greater detail. Television signals from a satellite television broadcast network are input to a tuner 10. In this embodiment, only one tuner is illustrated but any plural number of tuners may be used in the receiver 3. The tuner 10 is tuneable to a particular channel of the satellite television broadcast network for reception of media content such as television programmes and movies. Signals from the tuner 10 are passed to a Quadrature Phase Shift Key (QPSK) demodulator 11. Demodulated signals are error-corrected by way of a forward error corrector circuit 12. The STB 3 has a hard disk 13 which receives from the forward error corrector circuit 12 compressed video and audio data representing received television programmes for recording and subsequent playback.

The received signals comprise digitally encoded data. In this example, the data is compressed using the Digital Video Broadcast/Moving Pictures Expert Group 2 (DVB/MPEG 2) standard which permits both programme data and additional data (for example interactive service data) to be transmitted in a single channel. DVB/MPEG 2 enables high compression ratios to be achieved. The hard disk 13 receives and stores compressed data. The data is decompressed only after retrieval from the hard disk 13.

Satellite (and indeed cable) programmes are usually scrambled to prevent unauthorised access by non-authorised subscribers. The STB 3 therefore has a conditional access control circuit 14 which co-operates with a smart card 14a to determine whether the viewer has subscribed to a particular channel and is therefore authorised to access the channel. Parental control over channel access is also provided, at least in part, by the access control circuit 14. The STB 3 further comprises a descrambling circuit 15 which is controlled by the access control circuit 14 to enable the descrambling of the signal by authorised subscribers. In an embodiment, the received data is stored in the hard disk 13 in the compressed and encrypted form. The data is decompressed as mentioned above and descrambled only after retrieval from the hard disk 13. In an embodiment, data received from a remote STB is also in compressed and encrypted form, and decompressed and descrambled in a similar manner on condition that access to the received data by the receiving STB 3 is allowed.

Descrambled data is supplied to a transport/demultiplexer 16 which separates the data into video data, audio data, user services data, programme scheduling data, etc. for distribution to various locations within the STB 3. The STB 3 also comprises a video decoder circuit 18 for video decompression and processing utilizing a dedicated video Random Access Memory (RAM) 17, and an audio decoder circuit 19 for audio decompression and processing, operating according to the MPEG 2 standard, for example. The video and audio decoder circuits 18 and 19 receive demultiplexed signals directly from the transport/demultiplexer 16, or from the hard disk 13. Decompressed video data is supplied to display circuitry 20, which may be a standard definition and/or a high definition display circuitry, for encoding and converting the video data into an appropriate format . The display circuitry 20 may for example provides the video data to a standard definition digital encoder and Digital to Analogue Converters (not shown) where the data is encoded and converted into an appropriate format for direct input to a television set. Alternatively, or in addition, the display circuitry 20 may supply the video data to a high definition digital encoder (not shown) where the data is encoded into an appropriate high definition format for output to a high definition TV via a High Definition Multimedia Interface (HDMI) interface (not shown). In this case, the HDMI interface may also receive decompressed audio data from the audio decoder circuit 19 via audio post-processing circuitry 21, for output to an HDMI input of a high definition TV if so desired. Decompressed and processed audio data may also be supplied to an audio DAC (not shown) for direct input to an analogue audio device or speakers.

The STB 3 is controlled by a processor 23 which communicates with the various units of the STB via a bus 24. The processor 23 has associated with it Read Only Memory (ROM) 25 (optionally including a Compact Disc - Read Only Memory (CD-ROM) drive 25a), Random Access Memory (RAM 26) and a flash (non-volatile and writable) memory 27.

The processor 23 controls operation of the STB 3 by tuning the tuner 10 to receive signals for the desired channels by controlling the demultiplexing, descrambling and decompression so that the desired programme and/or interactive service data is displayed on the screen of the TV 2, and by controlling the hard disk 13 to record desired television programmes or movies, or to play back previously recorded media content. The processor 23 also controls operation of the STB 3 to play back previously recorded media content received from a remote STB, as will be discussed below. Viewer selection of desired programmes and customer services is controlled by viewer manipulation of a remote control unit 28, which in response to such viewer manipulation transmits control signals to a STB 29 for input to the processor 23. The remote control unit 28 also allows the viewer to control of the operation of the hard disk 13 to record television programmes, to play back recorded television programmes and to program the recording of television programmes, etc.

The STB 3 further comprises a wired network interface 30, such as an Ethernet network interface, and optionally a wireless network interface 31 providing a wireless network data link. The wired network interface 30 and the wireless network interface 31 may be connected to other devices of the LAN 1 such as a Personal Computer (PC), a games console and/or other digital equipment (not shown) via for example a router or switch (not shown). The network interfaces 30 and 31 enable the STB 3 to be connected to other devices, for example to enable reception of services transmitted via other media such as broadband cable, external storage media or digital terrestrial broadcast. The STB 3 may further comprise a modem interface 32 for connecting a telephone network.

The STB 3 may also comprise a media streaming server 22 to process and deliver media content items stored in the hard disk 13 to remote media play back devices over the LAN 1 via the network interfaces 30 and 31. For example, the media streaming server 22 may provide a media stream to a remote STB connected to the LAN 1 for play back by the remote STB.

Operation of the STB 3 is controlled by software that makes the processor 23 responsive to control signals from the remote control unit 28, additional data in the received signals and/or data stored in the memory units 25 to 27. Interaction between hardware and software in the STB 3 is described in detail in our international patent application published as WO 01/11865. Operation of the STB 3 in receiving and decoding data representing television programmes and data defining scheduling and other information related to the programmes is described in detail in our international patent application published as WO 96/37996. Operation of the STB 3 in providing interactive services is described in our international patent application published as WO 97/23997.

Within the Digital Video Broadcasting (DVB) standards for digital TV transmission there exists a standard for the transmission of schedule information such that it can be decoded and presented correctly to subscribers in the form of an Electronic Programme Guide (EPG).

This DVB standard is known generally as the SI standard and can be found in the specification: ETS 300 468, ETSI Digital Broadcasting Systems for Television, Sound and Data Services; Specification for Service Information (SI) in Digital Video Broadcasting (DVB) Systems 2nd edition. Guidelines for using the specification are given in ETSI ETR 211 - DVB SI Guidelines.

In order to allow broadcasters to utilise any proprietary features of their EPGs the SI standard includes methodology for extending the format of the service information (SI) stream by the inclusion of private data tables and descriptors. The STB 3 is, of course, designed to support the mandatory parts of the SI specification.

### Shared Planner

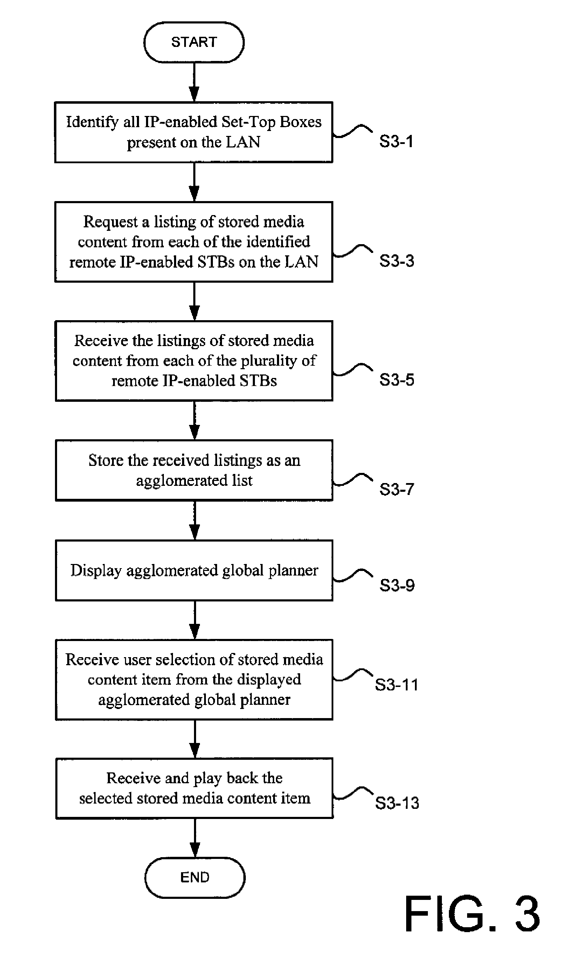

A STB 3 is operable to display a listing of recorded television programmes, for example through an EPG planner. According to one embodiment, each STB, for example STB 3a which will be referred to as the local STB 3a, is also operable to display an agglomerated listing of recorded media content on other IP-enabled STBs 3b,3c on the LAN 1. As illustrated in the flow diagram of Figure 3, at step S3-1, the local STB 3a identifies all IP-enabled STBs 3 present on the LAN 1 in accordance with well-known techniques for locating devices on a network. For example, the local STB 3a could broadcast an acknowledgement request to all devices connected to the LAN 1 and identify the other remote IP-enabled STBs, for example STBs 3b and 3c, from the received responses. At step S3-3, the local STB 3a then requests a listing of stored media content from each of the identified remote IP-enabled STBs 3b and 3c on the LAN 1. The listings of stored media content received at step S3-5 from each of the plurality of remote IP-enabled STBs 3b and 3c are stored at step S3-7, together with listings of locally stored media content, as an agglomerated list on the local STB 3a for display to a user on the connected TV 5 as an agglomerated global planner at step S3-9. In this way, the user at a particular STB 3a can access the media content stored on any of the STBs within the network through the displayed agglomerated global planner listing the media content stored at each of the STBs 3a, 3b and 3c. The agglomerated list of media content may also indicate an identification of the respective STB on the network storing that particular media content item.

Alternatively, instead of displaying an agglomerated global planner, a user at an STB 3a may simply switch between displaying a planner of the local STB 3a and the planners of remote STBs 3b and 3c.

At step S3-11, the local STB 3a receives a user selection of a particular remotely stored media content item from the displayed agglomerated list. At step S3-13, the STB 3a initiates play back of the selected media content item provided for example from the media streaming server 22 of the remote STB 3a,3b storing that particular media content item. As an alternative, the selected media content may be downloaded to the hard disk 13 of the requesting local STB 3a for subsequent play back.

Another possibility is to request and receive EPG data from each of the identified remote STBs 3b and 3c connected to the LAN 1. The requesting local STB 3a is then operable to remotely set recordings and manage the EPG planner for any other IP-enabled STB 3b, 3c connected to the LAN 1. In this way, an IP-enabled STB 3a is configured as a client to control recordings on another networked remote STB 3b,3c or to manage the planner on that remote STB 3b,3c, for example to delete stored recorded media content items.

### Filtering

The programme listing data that is received by a requesting STB 3a may be filtered according to predetermined access criteria. For example, each stored media content item may be associated with access criteria such as a minimum viewer age restriction or a subscription level restriction which depends upon, for example, channels that a particular user is subscribed to and allowed to view.

In one embodiment, the filtering may be performed by the remote IP-enabled STB 3b,3c which determines, for each stored media content item, if the viewer details associated with the requesting STB 3a meet the access criteria of that particular media content item. This may be performed by comparing the associated access criteria with respective viewer details associated with the requesting STB 3a. For example, a minimum viewer age restriction can be compared with the viewer age associated with the requesting STB and the subscription level restriction can be compared with the viewer subscription level. The viewer details such as the viewers age and subscription level may be stored, for example, on the STB itself or on the viewer's smart card 14a that is inserted into the local STB 3a. If the remote STB 3b,3c determines that the viewer details meet with the access criteria, then that particular stored media content item is included in the listing transmitted to the requesting local STB 3a. On the other hand, if the viewer details do not comply with the access criteria, then the particular media content item is filtered out and is not included in the listing of stored media content items transmitted to the requesting STB 3a.

In an alternative embodiment, the filtering may be performed by the requesting STB 3a in a similar manner as described above, after a complete listing of the stored media content items has been received from each remote STB 3b,3c.

As another alternative, filtering may be applied through parental controls appropriate to the requesting STB on which the planner is being viewed. As mentioned above, the parental controls may for example restrict access to particular channels. As another example, the parental controls may restrict which movie ratings are viewable through the particular requesting STB 3a.

In this way, a level of control is provided so that, for example, children would not be able to see recorded programmes that they are not allowed to watch.

### Alternatives and Modifications

In the above description, the Set-Top Boxes are arranged to store and execute software which controls their respective operation to perform the method described with reference to Figure 3. As those skilled in the art will appreciate, a computer program for configuring a programmable device to become operable to perform the above method may be stored on a carrier and loaded into memory, such as a flash memory of the STB 3. The program may be downloaded as a satellite broadcast signal and applied as a patch or update to software already resident on the STB 3. The scope of the present invention includes the program, the carrier carrying the program and the broadcast signal.

In the embodiments described above, each STB in the network is identical and is operable to receive, record and store media content items. Those skilled in the art will appreciate that not all of the STBs in the network require the capability to record and store media content. For example, the local requesting STB does not need to be able to record and store recorded media content items if it is able to access and play back recorded media content from other remote STBs. As yet another alternative, other media content devices such as a PC can be connected to the network and configured to access and play back recorded media content from other remote STBs as described in the above embodiments. Additionally, a PC including a suitable card reader for receiving a smart card may be configured to perform conditional access control of received data as described in the above embodiments.

In the embodiments described above, the system comprises a plurality of networked STBs. As those skilled in the art will appreciate, it is possible to configure a PC to receive and share media content in the same way as any one of the STBs discussed in the above embodiments. Such a PC would include all of the STB components described above with reference to Figure 2, with the tuner components possibly provided by way of a TV tuner card in the PC.

In an embodiment described above, an agglomerated global planner provides a listing of media content available from all STBs connected to the LAN. As those skilled in the art will appreciate, individual STBs may be configured to allow users to select whether the STB is visible or not by other STBs. In this way, if a particular STB is configured to be "hidden" in the network, that STB will not respond to a request from a local STB for the listing of stored media content on that particular "hidden" STB.

It will be understood that embodiments of the present invention are described herein by way of example only, and that various changes and modifications may be made without departing from the scope of the invention.

### ALTERNATIVE EMBODIMENTS

Alternative embodiments are set out in the following clauses:
1. In a system of media devices in a local area network, a method comprising:
   requesting access by a first media device to media content stored on a second media device via the local area network, each media content being associated with at least one access criterion;
   determining for each stored media content if the first media device meets the associated at least one access criterion; and
   displaying by the first media device a listing of the stored media content which are determined to have associated at least one access criterion met by the first media device.
2. The method of clause 1, wherein the determining step comprises comparing the at least one access criterion with respective viewer details associated with the first media device and determining if the viewer details meet the access criteria.
3. The method of clause 2, wherein the at least one access criterion includes a viewer age restriction and wherein the viewer details include a viewer age.
4. The method of clause 2, wherein the at least one access criterion includes a subscription level restriction and wherein the viewer details include a subscription level.
5. The method of any one of clauses 2 to 4, wherein the viewer details are stored on a viewer card.
6. The method of any preceding clause, wherein the first and second media devices are IP-enabled set-top boxes, and the method further comprises receiving and storing a plurality of media content at the second media device.
7. The method of clause 6, wherein the plurality of media content is received from a broadcast media provider over at least one of a satellite network and the Internet.
8. In a system including a plurality of media devices in a local area network, each media device for receiving and storing a plurality of media content, a method comprising:
   receiving a listing of stored media content from each of said plurality of media devices; and
   displaying a listing of the media content stored at each of said plurality of media devices as an agglomerated list.
9. In a system including a plurality of media devices in a local area network, each media device for receiving and storing a plurality of media content, a method comprising:
   displaying at a first media device a listing of media content stored on the first media device; and
   switching to displaying at the first media device a listing of media content stored on a second media device.
10. The method of clause 9, wherein the listing comprises a planner interface for displaying a list of stored media content and for managing the stored media content.
11. The method of clause 10, wherein the method further comprises managing the media content stored on the second media device via a planner interface when the display at the first media device is switched to a listing of media content stored on a second media device.
12. Apparatus arranged to perform the method of any one of clauses 1 to 11.
13. A computer storage medium storing computer implementable instructions for configuring a programmable apparatus to become configured to perform the method of any one of clauses 1 to 11.

## Claims

1. A method of displaying a listing of media content stored on a plurality of media devices in a local area network, the method comprising:
requesting access by a first media device to media content stored on a second media device via the local area network, each media content being associated with at least one access criterion;
**characterised by**:
determining for each stored media content if the first media device meets the associated at least one access criterion; and
displaying by the first media device an agglomerated listing of the media content stored on the first and second media devices which are determined to have associated at least one access criterion met by the first media device.

2. The method of claim 1, wherein the determining step comprises comparing the at least one access criterion with respective viewer details associated with the first media device and determining if the viewer details meet the access criteria.

3. The method of claim 2, wherein the at least one access criterion includes a viewer age restriction and wherein the viewer details include a viewer age.

4. The method of claim 2, wherein the at least one access criterion includes a subscription level restriction and wherein the viewer details include a subscription level.

5. The method of any one of claims 2 to 4, wherein the viewer details are stored on a viewer card.

6. The method of any preceding claim, wherein the first and second media devices are IP-enabled set-top boxes, and the method further comprises receiving and storing a plurality of media content at the second media device.

7. The method of claim 6, wherein the plurality of media content is received from a broadcast media provider over at least one of a satellite network and the Internet.

8. The method of any preceding claim, further comprising:
displaying by the first media device a listing of media content stored on the first media device; and
switching to displaying by the first media device a listing of media content stored on the second media device.

9. The method of claim 8, wherein the listing comprises a planner interface for displaying a list of stored media content and for managing the stored media content.

10. The method of claim 9, wherein the method further comprises managing the media content stored on the second media device via a planner interface when the display at the first media device is switched to a listing of media content stored on a second media device.

11. Apparatus comprising means for performing the method of any one of claims 1 to 10.

12. A computer storage medium storing computer implementable instructions for configuring a programmable apparatus to become configured to perform the method of any one of claims 1 to 10.
